Europäisches Patentamt

European Patent Office

Office européen des brevets

(19)

(11) **EP 0 520 850 B1**

(12) **FASCICULE DE BREVET EUROPEEN**

(45) Date de publication et mention
de la délivrance du brevet:
**21.02.1996 Bulletin 1996/08**

(51) Int Cl.6: **G01N 17/00, B01J 3/03**

(21) Numéro de dépôt: **92401555.5**

(22) Date de dépôt: **05.06.1992**

(54) **Cellule pour étudier les interréactions pouvant se produire à l'interface entre un matériau et un produit**

Zelle zum Untersuchen von an einer Schnittstelle zwischen einem Material und einem Produkt bestehenden Wirkungen

Cell for investigating reaction occurring at a material-product interface

(84) Etats contractants désignés:
**AT BE CH DE DK ES FR GB GR IT LI LU NL PT SE**

(30) Priorité: **27.06.1991 FR 9107945**

(43) Date de publication de la demande:
**30.12.1992 Bulletin 1992/53**

(73) Titulaire: **CARNAUDMETALBOX**
**F-75017 Paris (FR)**

(72) Inventeurs:
- **Platzer, Olivier**
  **F-92320 Chatillon (FR)**
- **Guimard, Annie**
  **F-91400 Saclay (FR)**

(74) Mandataire: **CABINET BONNET-THIRION**
**F-75003 Paris (FR)**

(56) Documents cités:
**DD-B- 91 618**          **DE-U- 8 330 094**
**FR-A- 2 276 580**

## Description

L'invention se rapporte à une cellule conçue pour étudier les inter réactions pouvant se produire à l'interface entre un matériau et un produit, notamment les phénomènes de migration et de dissolution. Elle vise de manière plus particulière l'étude des matériaux utilisés pour les emballages destinés à contenir des denrées alimentaires.

Dans le domaine du conditionnement, on analyse de façon rigoureuse les phénomènes se développant à l'interface entre le ou les matériaux d'un emballage et leur contenu, afin de mettre au point des emballages stables vis-à-vis de leur contenu pour répondre aux exigences d'inertie. Ces analyses sont menées en laboratoire et nécessitent que l'on recrée les conditions dans lesquelles peuvent se trouver les emballages, lors du conditionnement, du transport et du stockage. Pour recréer ces conditions le plus fidèlement possible, il est intéressant lorsque le matériau est constitué de plusieurs couches, de tester uniquement la surface du matériau susceptible d'être au contact du contenu de l'emballage. Pour cela, on connaît une cellule métallique symétrique comprenant un boîtier tubulaire d'environ 12 cm de diamètre et d'environ 0,5 cm d'épaisseur, ouvert de part et d'autre et muni d'un embout de remplissage. De chaque côté en vis-à-vis, on dispose sur une gorge munie d'un joint torique, un disque de matériau échantillon. L'ensemble est maintenu en "sandwich" entre deux plaques métalliques et serré à l'aide de tiges filetées munies d'écrou. On introduit un produit simulant par l'embout de remplissage. La cellule est alors soumise à un certain nombre de tests, à la suite desquels, on fait des prélèvements de produit simulant pour effectuer des analyses qualitatives et quantitatives. Ce type de cellule permet de tester deux échantillons de matériau. Cependant la cellule n'est pas conçue pour tester les matériaux d'emballages dans les conditions d'appertisation habituelles, c'est-à-dire à des températures pouvant aller jusqu'à 140° C dans la vapeur ou dans l'eau. Dans de telles conditions, cette cellule pose deux problèmes majeurs:

- d'une part, en l'absence d'une contre-pression appliquée dans l'autoclave, elle n'est plus étanche lorsque la pression à l'intérieur de la cellule augmente;
- d'autre part, elle n'interdit pas l'accès du milieu extérieur (eau, vapeur) à la face non testée ou à la tranche de l'échantillon, entraînant des contaminations du simulant dans le cas d'échantillons perméables, ou des problèmes de corrosion dans le cas d'échantillons comprenant une partie métallique (fer blanc, acier, aluminium).

On ne dispose donc pas d'une cellule opérationnelle dans toutes les situations envisageables, notamment pour simuler le cas des conserves appertisées où l'emballage rempli peut être soumis à des traitements thermiques d'au moins 130°C et doit garder son étanchéité vis-à-vis de l'extérieur. D'autre part, les emballages sont souvent en matériau composite multicouches avec une couche ou une face métallique. Un contact direct entre la tranche et/ou la surface d'un disque échantillon, la cellule métallique et un milieu extérieur humide peut entraîner l'établissement d'une "pile" électrochimique et provoquer des réactions parasites (corrosion....). Le produit simulant est alors contaminé et les analyses ne sont plus fiables et représentatives de la réalité.

La présente invention a pour but de pallier ces inconvénients en proposant une cellule dont la conception permet de recréer les situations du conditionnement sans risque de contamination extérieure et avec une tenue en température d'au moins 130°C, correspondant aux températures les plus élevées de stérilisation pratiquées aujourd'hui.

A cet effet la présente invention propose une cellule pour étudier les inter réactions pouvant se produire à l'interface entre un matériau et un produit, comportant un corps de cellule dans lequel est définie une cavité à remplir avec un produit simulant comportant un embout de remplissage muni d'un bouchon obturateur et un rebord muni d'un joint intérieur sur lequel il est prévu de disposer un disque échantillon dudit matériau, et des moyens de fermeture de ladite cavité, caractérisée en ce que les moyens de fermeture sont constitués de deux couvercles, intérieur et extérieur; en ce que des joints d'étanchéité sont agencés pour coopérer avec chaque couvercle, respectivement, de sorte que la cellule puisse être fermée hermétiquement, le joint du couvercle intérieur recevant l'échantillon et en ce que les matériaux constitutifs de la cellule sont stables vis-à-vis des produits simulants et adaptés à une tenue en température d'au moins 130°C.

De telles dispositions permettent d'assurer pour des échantillons d'épaisseur quelconque, une étanchéité de la cellule totale vis-à-vis de l'extérieur, même aux températures les plus élevées, supérieures à 130°C.

Selon d'autres caractéristiques, on dispose une feuille en matériau isolant entre le disque échantillon et le couvercle intérieur.

Selon une caractéristique, le rebord de la cavité est prolongé latéralement radialement en un renfoncement dans lequel est disposé un anneau en matériau isolant.

Ces dispositions supplémentaires permettent d'isoler électriquement, par rapport aux parties métalliques de la cellule, la tranche (par l'anneau isolant) et la face non testée (par la feuille en matériau isolant) d'un échantillon comprenant une partie métallique.

L'invention sera mieux comprise à la lumière de la description qui va suivre donnée uniquement à titre d'exemple et faite en référence aux dessins annexés dans lesquels :

- la figure 1 illustre une vue en coupe des éléments d'une cellule selon un mode de réalisation de l'invention;
- la figure 2 illustre une vue en coupe de la cellule représentée sur la figure 1 prête à l'usage.

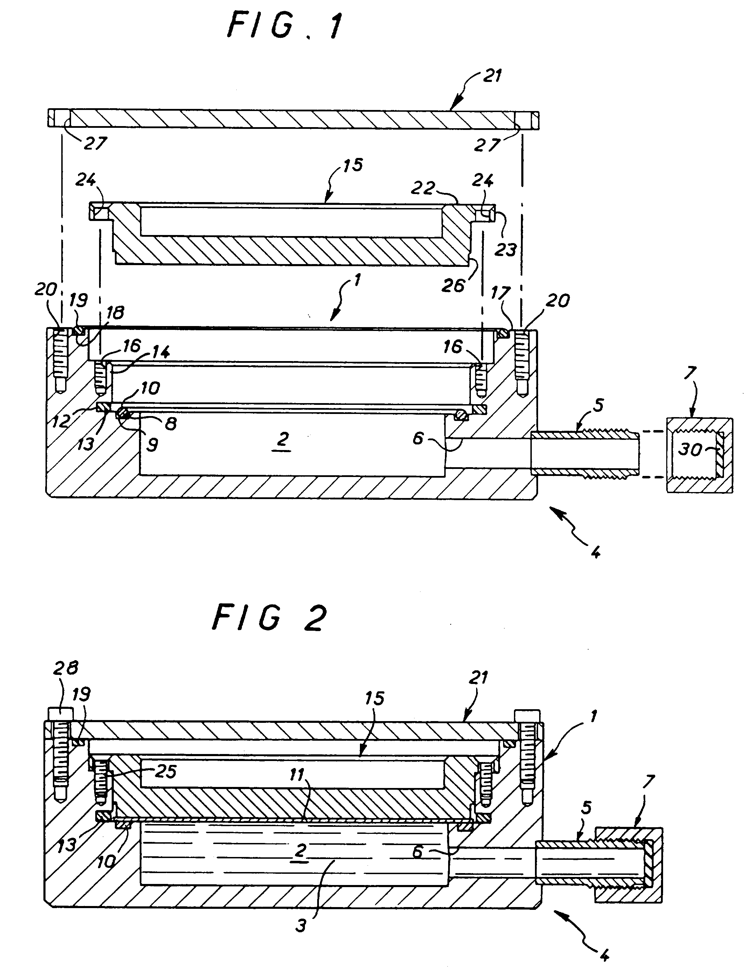

Selon le mode de réalisation représenté aux figures 1 et 2, la cellule cylindrique, comprend un corps de cellule 1 et des moyens de fermeture constitués par un double couvercle comprenant un couvercle intérieur 15 et un couvercle extérieur 21. Dans le corps de la cellule est définie une cavité 2 qu'il est prévu de remplir en partie ou entièrement avec un produit simulant 3 à l'aide d'un embout de remplissage 4. Cet embout 4 est constitué par un tube 5 soudé au corps de la cellule. Un conduit 6, aménagé dans le corps de la cellule relie la cavité 2 et l'embout de remplissage 4. Un bouchon obturateur 7 à vis muni d'un joint pastille 30, assure la fermeture de l'embout 4. La cavité 2 présente un rebord supérieur 8, dans lequel est aménagée une gorge intérieure 9 pour un joint torique 10 sur lequel il est prévu de disposer un disque de matériau échantillon 11 à tester. Le rebord supérieur 8 s'étend latéralement et radialement en un renfoncement 12 dans lequel est placé un anneau isolant 13 en matériau isolant. En partie supérieure du corps de la cellule, au dessus de la cavité 2, est défini un logement avec un épaulement 14, la forme du logement correspondant globalement à celle du couvercle intérieur 15. Dans l'épaulement 14 sont aménagés des trous taraudés 16 intervenant pour la fixation du couvercle intérieur 15. Le corps de la cellule présente également un rebord supérieur 17 dans lequel est aménagée une gorge supérieure 18 pour un joint torique 19. Le rebord supérieur 17 comporte également des trous taraudés intervenant pour la fixation du couvercle extérieur 21. Le couvercle intérieur 15 présente une section transversale globalement en U avec un rebord 22 comportant une partie saillante 23 radialement vers l'extérieur. A la base, le couvercle présente un léger rétrécissement 26. La partie saillante 23 du rebord comporte des trous 24 conformés pour abriter les têtes de vis de fixation engagées dans les trous taraudés 16. Des vis de fixation 25 sont prévues pour assurer la fixation du couvercle intérieur 15. Le couvercle intérieur présente une partie creuse pour alléger la cellule. Le couvercle extérieur 21 est formé par une plaque munie à la périphérie de trous 27. Des vis de fixation 28 sont prévues pour assurer la fixation du couvercle extérieur 21. Elles traversent les trous 27 et sont engagées dans les trous taraudés 20.

Le corps de la cellule 1, l'embout de remplissage 5, le bouchon obturateur 7, les couvercles intérieur 15 et extérieur 21 et les vis de fixation 25 et 28 sont en acier inoxydable.

Le joint torique intérieur 10 est en silicone, dans le cas de simulant aqueux, ou en polytétrafluoroéthylène, dans le cas de simulant gras ou organique (huile d'olive, iso-octane, heptane...etc).

Le joint extérieur 19 est en caoutchouc fluorocarboné. Le joint pastille 30 peut, soit être en silicone, soit en polytétrafluoro éthylène suivant également la nature du produit simulant.

L'anneau isolant 13 est en tétrafluoro éthylène.

Le volume de la cavité est d'environ 160 cm$^3$. La cellule permet de tester un disque échantillon de matériau d'environ 118 mm de diamètre et d'épaisseur quelconque inférieure ou égale à 5 mm.

La cellule munie de l'anneau isolant 13 placé dans le renfoncement 12, est utilisée de la manière suivante. On positionne le joint torique intérieur 10 dans la gorge intérieure 9, on centre le disque échantillon 11 sur ce joint la face à tester en regard de la cavité 2. Dans le cas d'un échantillon présentant une face métallique susceptible d'être au contact du couvercle intérieur, on intercale une feuille de matériau isolant électriquement, par exemple en carton ou en plastique, entre le disque 11 et le couvercle intérieur 15. On place le couvercle intérieur 15 dans le corps de la cellule et on le fixe à l'aide des vis 25. L'ensemble est conçu pour que lorsque l'on serre les vis 25 le joint intérieur sur lequel repose l'échantillon soit suffisamment écrasé pour que l'étanchéité vis-à-vis du produit simulant que l'on introduira dans la cavité soit assurée. On positionne ensuite le joint torique supérieur 19 dans la gorge 18 et on fixe le couvercle extérieur 21 à l'aide des vis 28. L'étanchéité vis-à-vis de l'extérieur est ainsi assurée. La cavité 2 est ensuite remplie de produit simulant 3 à l'aide de l'embout de remplissage 4. On ferme l'embout en vissant le bouchon obturateur 7 dans lequel on a placé au préalable le joint pastille en silicone, jusqu'à comprimer celui-ci.

A la suite des différents traitements, on prélève le produit simulant et on procède aux analyses qualitatives et quantitatives souhaitées.

Selon un autre mode de réalisation la cellule présente toutes les caractéristiques du mode de réalisation précédemment décrit excepté le renfoncement pour un anneau en matériau isolant. Ce type de cellule est destiné aux échantillons ne comportant pas de couche métallique et ne nécessitant donc pas de protection de leur tranche.

EXEMPLE 1

Détermination de la migration globale d'un échantillon de fer-blanc verni en contact avec l'eau, 30 mn à 121°C puis 10 jours à 40°C.

L'éprouvette de fer-blanc verni (disque diamètre 118 mm, épaisseur 0,2 mm) est positionné dans la cellule comme décrit dans l'invention, face vernie en regard de la cavité 2. Un disque de carton diamètre 118,5 mm est placé entre le disque éprouvette et le couvercle intérieur, et la cellule est fermée avec le couvercle extérieur.

La cavité est remplie avec 100 ml d'eau tridistillée (simulant) et obturée hermétiquement avec le bouchon 7 muni d'un joint silicone.

La cellule est alors retournée pour mettre le simulant au contact de la face vernie de l'éprouvette à tester, et stérilisée dans cette position en autoclave dans l'eau à 121°C pendant 30 mn. A l'issue de la stérilisation, la cellule est refroidie par immersion dans l'eau froide puis placée en étuve à 40°C pendant 10 jours, le simulant toujours au contact de la face vernie de l'éprouvette.

A l'issue des 10 jours en étuve, le simulant est transvasé dans un cristallisoir préalablement taré par l'intermédiaire de l'embout 4 après ouverture du bouchon 7.

Le cristallisoir est alors placé dans une étuve à 105°C jusqu'à évaporation complète du simulant, puis pesé. Le résidu sec RS est ainsi déterminé par gravimétrie. Le résidu sec est alors dissous dans de l'acide chlorhydrique dilué et la teneur en fer et en étain déterminée par spectrométrie d'absorption atomique.

On déduit ainsi la migration globale (= résidu sec/surface de l'échantillon testé) et les migrations spécifiques en métaux.

Les résultats moyens obtenus sur 3 éprouvettes provenant du même échantillon sont les suivants :

Migration globale
(déduction faite du résidu sec, propre au simulant, soit 0,15 mg pour 100 ml de simulant)

$$Mg = 1,1 \text{ mg/dm}^2 \qquad (\text{écart-type} = 0,1 \text{ mg/dm}^2)$$

Migration en fer

$$M \text{ (Fer)} < 0,01 \text{ mg/dm}^2$$

Migration en étain

$$M \text{ (étain)} < 0,01 \text{ mg/dm}^2$$

EXEMPLE 2

Détermination de la migration globale d'un échantillon de plastique multicouche (épaisseur totale 0,8 mm) en contact avec l'acide acétique à 3 %, 30 mn à 121°C puis 10 jours à 40°C.

On procède comme décrit dans l'exemple 1, en utilisant cette fois l'acide acétique à 3 % comme simulant à la place de l'eau. Il est ici inutile d'intercaler un disque en carton entre le couvercle intérieur et l'éprouvette à tester, cette dernière n'étant pas conductrice de l'électricité.

Résultat :
(3 éprouvettes provenant du même échantillon de plastique)
Migration globale
(déduction faite du résidu sec propre à l'acide acétique soit 0,33 mg pour 100 ml de simulant)

$$Mg = 3,2/\text{dm}^2 \qquad (\text{écart-type} = 0,2 \text{ mg/dm}^2)$$

**Revendications**

1. Cellule pour étudier les inter réactions pouvant se produire à l'interface entre un matériau et un produit, comportant un corps de cellule (1) dans lequel est définie une cavité (2) à remplir avec un produit simulant (3) comportant un embout de remplissage (4) muni d'un bouchon obturateur (7) et un rebord (8) muni d'un joint intérieur (10) sur lequel il est prévu de disposer un disque échantillon (11) dudit matériau, et des moyens de fermeture de ladite cavité, caractérisée en ce que les moyens de fermeture comportent deux couvercles, extérieur (21) et intérieur (15), en ce que des joints d'étanchéité (10,19,30) sont agencés pour coopérer avec chaque couvercle (21,15), respectivement de sorte que la cellule (1) puisse être fermée hermétiquement le joint (10) de couvercle intérieur recevant l'échantillon (11) et en ce que les matériaux constitutifs de la cellule (1) sont stables vis-à-vis des produits simulants et adaptés à une tenue en température d'au moins 130°C tout en garantissant une bonne étanchéité de l'ensemble.

2. Cellule selon la revendication 1, caractérisée en ce que ledit rebord (8) de la cavité (2) est prolongé latéralement radialement en un renfoncement (12) dans lequel est disposé un anneau (13) en matériau isolant.

3. Cellule selon la revendication 1 ou 2, caractérisée en ce que le corps de la cellule (1), le couvercle intérieur (15), le couvercle extérieur (21) et le bouchon obturateur (7) sont en acier inoxydable.

4. Cellule selon l'une quelconque des revendications précédentes, caractérisée en ce que les joints (10,30) sont en silicone ou en polytétrafluoroéthylène et (19) en caoutchouc fluorocarboné.

5. Cellule selon l'une quelconque des revendications précédentes, caractérisée en ce que l'anneau (13) est en tétrafluoroéthylène.

6. Cellule selon l'une quelconque des revendications précédentes, caractérisée en ce qu'une feuille en matériau isolant électriquement est intercalée entre le disque de matériau échantillon (11) et le couvercle intérieur (15).

**Claims**

1. Cell for studying the interactions which may occur at the interface between a material and a product, including a cell body (1) in which there is defined a cavity (2) to be filled with a simulation product (3) having a filling nozzle (4) provided with a sealing plug (7) and a shoulder (8) provided with an internal joint (10) on which provision is made to dispose a sample disc (11) of the said material, and means for closing the said cavity, characterised in that the closure means include two covers, outer (21) and inner (15), in that sealing joints (10, 19, 30) are arranged so as to cooperate with each cover (21, 15) respectively so that the cell (1) can be closed hermetically, the inner cover joint (10) receiving the sample (11), and in that the materials making up the cell (1) are stable vis-a-vis the simulation products and adapted to withstand a temperature of at least 130°C whilst guaranteeing a good seal for the whole.

2. Cell according to Claim 1, characterised in that the said shoulder (8) of the cavity (2) is extended laterally and radially in an indentation (12) in which a ring (13) made of insulating material is disposed.

3. Cell according to Claim 1 or 2, characterised in that the body of the cell (1), the inner cover (15), the outer cover (21) and the sealing plug (7) are made from stainless steel.

4. Cell according to any one of the preceding claims, characterised in that the joints (10, 30) are made from silicone or polytetrafluoroethylene and (19) from fluorocarbon rubber.

5. Cell according to any one of the preceding claims, characterised in that the ring (13) is made from tetrafluoroethylene.

6. Cell according to any one of the preceding claims, characterised in that a sheet of electrically insulating material is interposed between the sample material disc (11) and the inner cover (15).


**Patentansprüche**

1. Zelle zum Untersuchen von an einer Schnittstelle zwischen einem Material und einem Produkt bestehenden Wirkungen, mit folgenden Merkmalen:

ein Zellengehäuse (1), in welchem ein Hohlraum (2) bestimmt ist, mit einem Simulationsprodukt gefüllt zu werden, wobei ein Füllansatz (4) mit einem Verschlußstopfen (7) versehen ist und eine Einfassung (8) eine innere Verbindungsstelle (10) aufweist, auf welche eine Probenscheibe (11) des Materials abgelegt werden soll, und
Verschlußeinrichtungen des Hohlraums,
dadurch gekennzeichnet, daß die Verschlußeinrichtungen zwei Deckel umfassen, nämlich einen äußeren (21) und einen inneren (15) Deckel,
daß Abdichtstellen (10, 19, 30) zur Zusammenarbeit mit jedem Deckel (21, 15) in der Weise vorgesehen sind, daß die Zelle (1) hermetisch mittels der Verbindungsstelle (10) des inneren Deckels, der die Probe (11) empfängt, verschlossen werden kann und daß die Materialien, welche die Zelle (1) bildet, gegenüber den Simulationsprodukten stabil sind und für ein Temperaturwiderstandsverhalten bei mindestens 130° C angepaßt sind, wobei gleichzeitig eine gute Abdichtung des Ganzen garantiert wird.

2. Zelle nach Anspruch 1, dadurch gekennzeichnet, daß die Einfassung (8) des Hohlraums (2) seitlich radial in einer Einsenkung (12) sich fortsetzt, in welchem ein Ring (13) aus Isolationsmaterial angeordnet ist.

3. Zelle nach Anspruch 1 oder 2, dadurch gekennzeichnet, daß das Gehäuse der Zelle (1), der innere Deckel (15), der äußere Deckel (21) und der Verschlußstopfen (7) aus nicht rostendem Stahl bestehen.

4. Zelle nach einem der vorhergehenden Ansprüche, dadurch gekennzeichnet, daß die Verbindungsstellen (10, 30) aus Silikon oder Polytetrafluoräthylen sowie die Verbindungsstelle (19) aus fluorokarbonisierten Kautschuk bestehen.

5. Zelle nach einem der vorhergehenden Ansprüche, dadurch gekennzeichnet, daß der Ring (13) aus Tetrafluoräthylen besteht.

6. Zelle nach einem der vorhergehenden Ansprüche, dadurch gekennzeichnet, daß eine Folie aus elektrisch isolierendem Material zwischen der Scheibe aus Probematerial (11) und dem inneren Deckel (15) dazwischengefügt ist.

# FIG. 1

# FIG 2